# EUROPEAN PATENT SPECIFICATION

(11) **EP 2 257 361 B1**
(45) Date of publication and mention of the grant of the patent: **29.03.2017**
(21) Application number: 09711598.4
(22) Date of filing: 30.01.2009
(51) Int. Cl.: B01D 53/50

(54) **A SPRAY DRYER ABSORBER DISPERSER ARRANGEMENT**
SPRÜHTROCKNUNGSABSORBIER- UND ABGABEANORDNUNG
AGENCEMENT DE DISPERSANT ABSORBANT SÉCHANT PAR PULVÉRISATION

(30) Priority: 20.02.2008 EP 08151663
(43) Date of publication of application: 08.12.2010
(73) Proprietor: General Electric Technology GmbH, 5400 Baden (CH)
(72) Inventor: ÅHMAN, Stefan, S-352 42 Växjö (SE); RAFIDI, Nabil Elias, S-352 61 Växjö (SE); TABIKH, Ali Mustapha, S-352 53 Växjö (SE); JOHANSSON, Lars-Eric, S-360 23 Älmeboda (SE); PEARSON, Thomas, Edwin, Knoxville TN 37923 (US)
(74) Representative: General Electric Technology GmbH
(86) International application number: PCT/EP2009/000638
(87) International publication number: WO 2009/103407

(56) References cited:
- DE-A1- 3 508 260
- DE-A1- 19 651 074
- US-A- 4 452 765
- US-A- 4 519 990
- US-A- 5 639 430

## Description

### Field of the Invention

The present invention relates to a spray dryer absorber which is operative for removing gaseous pollutants from a hot process gas and comprises a spray dryer chamber and at least two dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber.

The present invention further relates to a method of removing gaseous pollutants from a hot process gas by means of a spray dryer absorber.

### Background of the Invention

In the combustion of a fuel, such as coal, oil, peat, waste, etc., in a combustion plant, such as a power plant, a hot process gas is generated, such a hot process gas, often referred to as a flue gas, containing pollutants, including acid gases, such as sulphur dioxide, SO₂. It is necessary to remove as much as possible of the acid gases from the flue gas before the flue gas may be emitted to the ambient air. A spray dryer absorber may be utilized for removing acid gases, including sulphur dioxide, from a flue gas.

An example of a spray dryer absorber can be found in US 4,755,366. The spray dryer absorber comprises a chamber which is provided with a rotary atomizer having an atomizer wheel. The rotary atomizer is supplied with an aqueous suspension, sometimes referred to as a slurry, which comprises an absorbent, such as limestone. The atomizer wheel spins at a high rpm and atomizes the aqueous suspension, such that very small droplets are formed. The small droplets absorb acid gas components from the flue gas, and then form a solid residue thanks to the drying effect of the spray dryer absorber.

A problem of the spray dryer absorber of US 4,755,366 is that it is difficult to increase the capacity of a single spray dryer absorber with respect to the flue gas flow rate. One reason for this difficulty is that the very high rpm of the atomizer wheel poses mechanical obstacles to up-scaling its size. Thus, it often becomes necessary to build two, three, or more, parallel spray dryer absorber chambers for coping with higher flue gas flow rates.

US 5,639,430 discloses a vertical dry scrubber. Flue gas enters the dry scrubber and is distributed, by means of a distributing means, in a spray absorption mixing region. Atomizers spray a finely divided atomized reagent into the spray absorption region.

US 4,452,765 discloses a horizontal dry scrubber. Flue gas enters the dry scrubber via an inlet at the bottem of the dry scrubber. Nozzles arranged in a side wall of the dry scrubber supply a reagent which is mixed with a horizontally flowing flue gas.

A main object of present invention is to reduce the risk of formation of large aggregates on the wall of the spray dryer chamber. Besides US 5,639,430, corresponding to the preamble of claim 1, also US 4,519,990 addresses the problem of the formation of deposits on the walls of spray dryers.

### Summary of the Invention

An object of the present invention is to provide a spray dryer absorber which can be designed for a higher flue gas flow rate than the spray dryer absorbers of the prior art.

This object is achieved by means of a spray dryer absorber which is operative for removing gaseous pollutants from a hot process gas and comprises a spray dryer chamber and at least two dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber, the spray dryer absorber being characterised in said at least two dispersers being located at substantially the same distance from the periphery of the spray dryer chamber, the flow directing device of at least one specific disperser of said at least two dispersers being operative for providing said portion of the hot process gas passing through that specific disperser with a rotary movement in a direction, which is opposite to the direction of the rotary movement of the respective portion of the hot process gas dispersed by at least one other disperser being located closest to said at least one specific disperser, as seen along the periphery of the spray dryer chamber.

An advantage of this spray dryer absorber is that two or more dispersers can be arranged in one and the same spray dryer chamber, without such dispersers affecting each other in a negative way. Hence, the capacity with respect to the flue gas flow, and with respect to the absorption liquid flow, of one spray dryer absorber can be increased, still maintaining an efficient drying of liquid droplets, and an efficient removal of gaseous pollutants.

According to one embodiment the spray dryer absorber comprises at least three dispersers, maximum two consecutive dispersers of said at least three dispersers, as seen along the periphery of the spray dryer chamber, being operative for providing the flue gas supplied thereto with a rotary movement in the same direction. An advantage of this embodiment is that adverse effects on the mixing between the process gas and the liquid droplets that might be caused by neighbouring dispersers providing the gas supplied thereto with the same direction of rotary movement is minimized. Preferably, when the total number of dispersers is even, such as in a spray dryer absorber with totally 4, 6 or 8 dispersers, each specific disperser provides the process gas supplied thereto with a direction of rotary movement which is opposite to the direction of rotary movement provided to the respective portions of process gas supplied to the closest neighbouring dispersers of that specific disperser. When the total number of dispersers is not even, such as a spray dryer absorber with totally 3, 5, 7, or 9 dispersers, the occurrences of two consecutive dispersers providing the process gas supplied thereto with the same direction of rotary movement is preferably minimized to have only one occurrence in that spray dryer absorber of two consecutive dispersers providing the process gas with the same direction of rotary movement.

According to one embodiment the spray dryer chamber is circular as seen from above. An advantage of this embodiment is that adverse effects related to flow of gas in corners of the absorber can be avoided. Furthermore, a circular spray dryer chamber makes it easier to locate the dispersers in suitable positions relative to each other, with respect to gas flow properties.

According to one embodiment the total number of dispersers is 2 to 9. Such a number has been found to provide a spray dryer absorber which is efficient both with respect to investment cost, and with respect to removal of gaseous pollutants.

A further object of the present invention is to provide a method of removing gaseous pollutants from large volumes of hot process gas by means of a spray dryer absorber, such method being more efficient with respect to investment cost and removal efficiency than the prior art methods.

This object is achieved by means of a method of removing gaseous pollutants from a hot process gas by means of a spray dryer absorber comprising a spray dryer chamber and at least two dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber, the method being characterised in causing the respective portion of the hot process gas passing through at least one specific disperser of said at least two dispersers to obtain a rotary movement in a direction, which is opposite to the direction of the rotary movement of the respective portion of the hot process gas dispersed by at least one other disperser being located closest to said at least one specific disperser, as seen along the periphery of the spray dryer chamber.

An advantage of this method is that the risk of obtaining unwanted effects, such as the forming of large droplets, reduction of rotary movement, etc., is reduced in the areas where flow fields of dispersers being located adjacent to each other interact. This improves the efficiency of removing gaseous pollutants from the hot process gas and of drying the absorption liquid droplets.

According to one embodiment of the method said spray dryer absorber comprises at least three dispersers, maximum two consecutive dispersers of said at least three dispersers, as seen along the periphery of the spray dryer chamber, providing the flue gas supplied thereto with a rotary movement in the same direction.

Further objects and features of the present invention will be apparent from the description and the claims.

### Brief description of the drawings

The invention will now be described in more detail with reference to the appended drawings in which:
Fig. 1 is a schematic side view of a power plant.
Fig. 2 is a schematic three-dimensional view of a disperser.
Fig. 3a is a three-dimensional view of a spray dryer absorber in accordance with the prior art.
Fig. 3b is a top view of the spray dryer absorber of Fig. 3a.
Fig. 4a is a three-dimensional view of a spray dryer absorber in accordance with a first embodiment of the present invention.
Fig. 4b is a top view of the spray dryer absorber of Fig. 4a.
Fig. 5 is a top view of a further spray dryer absorber in accordance with the prior art.
Fig. 6 is a top view of a spray dryer absorber in accordance with a second embodiment of the present invention.
Fig. 7 is a top view of a spray dryer absorber in accordance with a third embodiment of the present invention.
Fig. 8 is a side view, and illustrates liquid droplet trajectories of the embodiment of Fig. 7 in comparison with the prior art embodiment of Figs. 3a and 3b.
Fig. 9 is a top view of a still further spray dryer absorber in accordance with the prior art.
Fig. 10 is a top view of a spray dryer absorber in accordance with a fourth embodiment of the present invention.
Fig. 11 is a diagram illustrating the amount of liquid hitting the wall of the respective spray dryer chamber in the various embodiments.

### Description of preferred embodiments

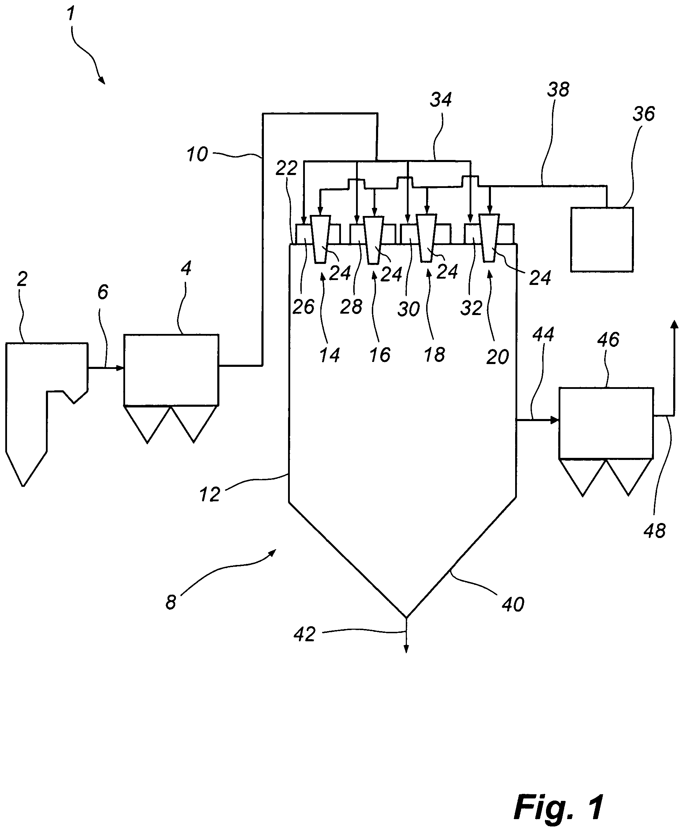

Fig. 1 is a schematic side view and illustrates a power plant 1. The power plant 1 comprises a boiler 2 in which a fuel, such as coal or oil, is combusted. The combustion of the fuel generates a hot process gas in the form of a flue gas. Sulphur species contained in the coal or oil will form sulphur dioxide, which will form part of the flue gas. The flue gas is forwarded from the boiler 2 to an electrostatic precipitator 4 via a duct 6. The electrostatic precipitator 4, an example of which is described in US 4,502,872, serves to remove dust particles from the flue gas.

The flue gas, from which most of the dust particles have been removed, is forwarded to a spray dryer absorber 8 via a duct 10. The spray dryer absorber 8 comprises a spray dryer chamber 12 and four dispersers 14, 16, 18, 20 that are mounted at a roof 22 of the spray dryer chamber 12. Each disperser 14, 16, 18, 20 comprises an atomizer 24. The atomizers 24 could be of the so-called rotary atomizer type, in which a wheel spinning at a high velocity is operative for atomizing an absorption liquid. In this regard, reference may be had, by way of exemplification and not limitation, to, for example, the rotary atomizer described in US 4,755,366, the teachings of which are hereby incorporated herein by virtue of this reference thereto. A further alternative is to utilize as the atomizers 24 atomizing nozzles which atomizes an absorption liquid which is supplied thereto under pressure.

Each disperser 14, 16, 18, 20 is provided with a flow directing device 26, 28, 30, 32. A dividing duct 34 is operative for supplying each of the dispersers 14, 16, 18, 20 with a portion of the flue gas, supplied via the duct 10. Each of the flow directing devices 26, 28, 30, 32 is operative for providing the respective portion of the flue gas with a rotary movement around the atomizer 24 of the respective disperser 14, 16, 18, 20. Two of the flow directing devices, namely the flow directing devices 26 and 30 of the dispersers 14, 18, are operative for providing the respective portion of the flue gas supplied thereto with a rotary movement around the respective atomizer 24 in the clockwise direction, as seen from the top of the spray dryer chamber 12. Two of the flow directing devices, namely the flow directing devices 28 and 32 of the dispersers 16, 20, are operative for providing the respective portion of the flue gas supplied thereto with a rotary movement around the respective atomizer 24 in the counter-clockwise direction, as seen from the top of the spray dryer chamber 12.

A tank 36 is operative for supplying each of the atomizers 24 with a flow of an absorption liquid, via a distributing pipe 38, such absorption liquid comprising, for example, a limestone slurry.

The action of the respective dispersers 14, 16, 18, 20 result in the mixing of flue gas with absorption liquid. The result is that the absorption liquid absorbs gaseous pollutants, such as sulphur dioxide, SO₂ from the flue gas. At the same time the absorption liquid is dried by the hot flue gas, resulting in a dry end product being collected at the bottom 40 of the spray dryer chamber 12. The dry product is removed for disposal via a pipe 42. The flue gas, from which most of the gaseous pollutants are being removed, travels substantially vertically downwards from the dispersers 14, 16, 18, 20 in the spray dryer chamber 12 and leaves the spray dryer absorber 8 via a duct 44. The flue gas is forwarded, by means of the duct 44, to a second filter, which may, for example, be an electrostatic precipitator 46. As alternative the second filter may be a bag house or any other suitable filtering device. The second filter 46 removes most of the remaining dust particles, and any dried residues of the absorption liquid. A cleaned flue gas may then be admitted to the ambient air via a clean gas duct 48.

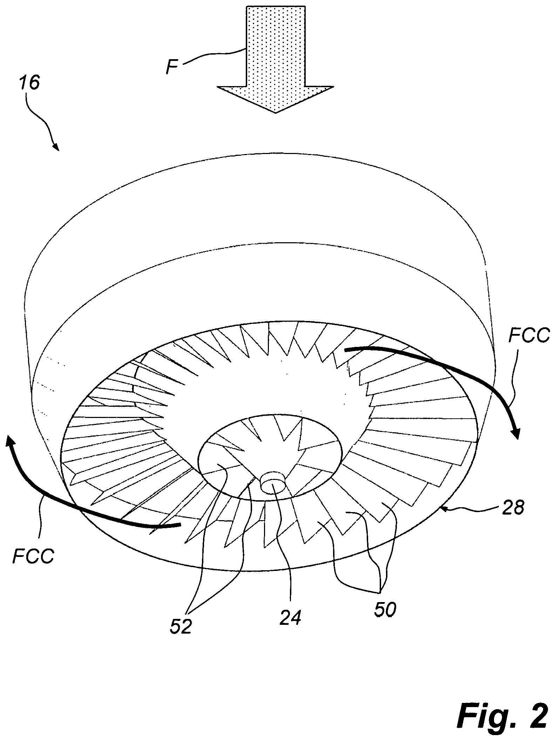

Fig. 2 illustrates the disperser 16 in more detail. The disperser 16 is illustrated as seen from below, at an angle. The flow directing device 28 of the disperser 16 comprises a plurality of outer guide vanes 50, and a plurality of inner guide vanes 52. The portion of the flue gas entering the disperser 16 from the dividing duct 34, illustrated in Fig. 1, has a generally downward direction, as illustrated in Fig. 2 by means of an arrow F. All of the guide vanes 50, 52 have such a direction that they will force the portion of the flue gas F to start rotating around the atomizer 24. Arrows FCC indicate how the guide vanes 50, 52 will deflect the flue gas, such that a flue gas flow rotating, spirally downwards, around the atomizer 24 will be formed. Such a rotating flue gas flow has been found to be very efficient for mixing the flue gas with the absorption liquid atomized by the atomizer 24. The direction of rotation of such flue gas flow FCC will, as seen from the top of the spray dryer chamber 12 illustrated in Fig. 1, be counter-clockwise in the case of the disperser 16.

It will be appreciated that the disperser 20 will have a similar design as the disperser 16 illustrated in Fig. 2. The flow directing devices 26, 30 of the dispersers 14 and 18, illustrated in Fig. 1, will, on the other hand, have guide vanes that have the opposite setting compared to the guide vanes 50, 52 of the flow directing device 28 illustrated in Fig. 2, such that the direction of rotation of the flue gas flow from the dispersers 14, 18 will, as seen from the top of the spray dryer chamber 12 illustrated in Fig. 1, be clockwise.

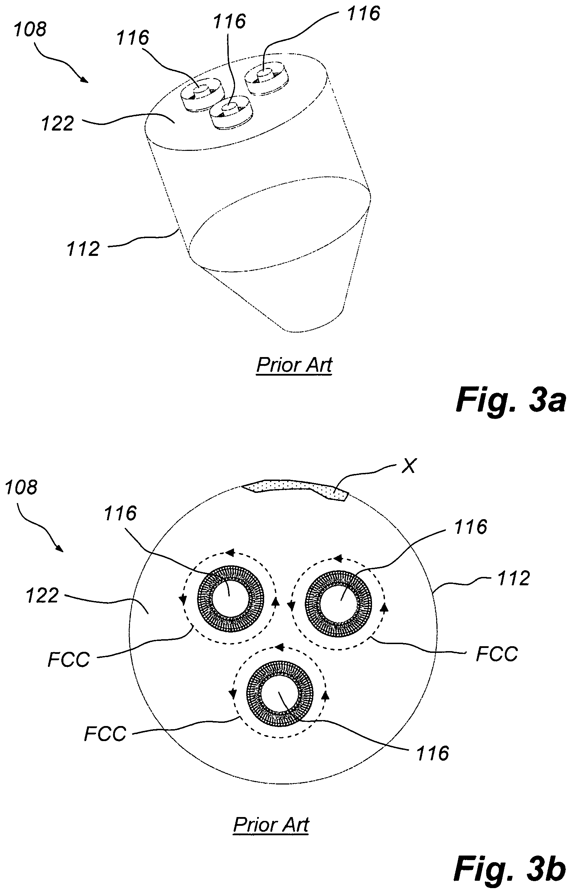

Fig. 3a illustrates a spray dryer absorber 108 in accordance with a prior art design. This spray dryer absorber 108 has a spray dryer chamber 112 and a roof 122. At its roof 122, the spray dryer absorber 108 is provided with three dispersers 116. Each of those dispersers 116 will have a similar design as the disperser 16 described hereinbefore with reference to Fig. 2.

Fig. 3b illustrates the spray dryer absorber 108 in accordance with the prior art design as seen from above. Since the three dispersers 116 each have a similar design as the disperser 16, illustrated hereinbefore with reference to Fig. 2, the flue gas supplied to each of the dispersers 116 will be provided with a rotary movement in the counter-clockwise direction, when viewed from the top of the spray dryer absorber 108. This is indicated in Fig. 3b by means of arrows FCC. It has been found, however, that operation of the prior art spray dryer absorber 108 illustrated in Fig. 3a and Fig. 3b results in severe problems with absorption liquid hitting the wall of the spray dryer chamber 112, e.g., at the position X illustrated in Fig. 3b. The absorption liquid hitting the wall of the spray dryer chamber 112 may result in the formation of large aggregates causing problems to the operation of the spray dryer absorber 108. Furthermore, it has been found that large droplets of absorption liquid are generated during operation of the spray dryer absorber 108. Such large droplets require much time to be dried. Hence, droplets that are not completely dried may end up in the bottom of the spray dryer chamber 112, or in a downstream filter, resulting in operational problems.

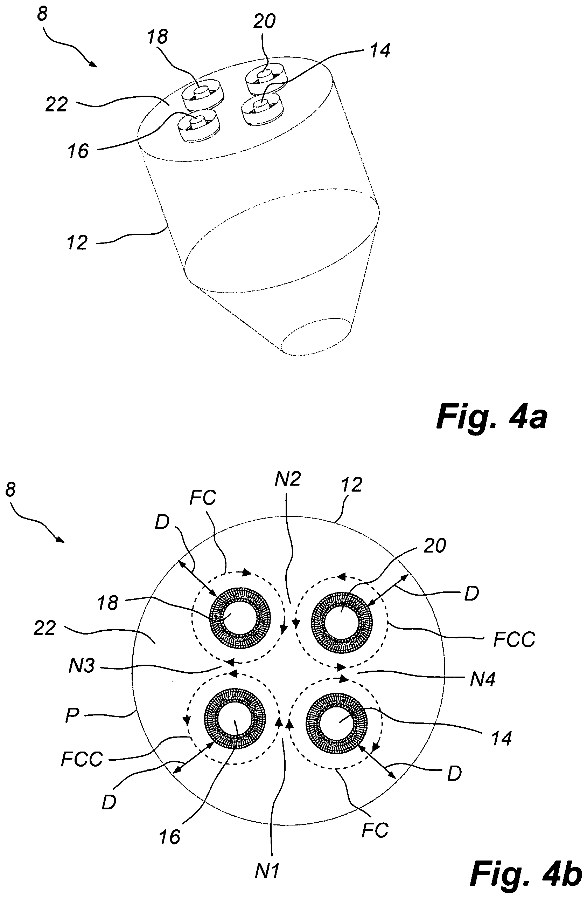

Fig. 4a illustrates the spray dryer absorber 8 in accordance with a first embodiment of the present invention, as previously illustrated with reference to Fig. 1 and Fig. 2. In Fig. 4a it is clearly illustrated how the spray dryer chamber 12 is provided, at its roof 22, with the four dispersers 14, 16, 18, 20.

Fig. 4b illustrates the spray dryer absorber 8 as seen from above. As described hereinbefore, with reference to Fig. 2, the dispersers 16 and 20 provide the flue gas supplied thereto with a counter-clockwise rotary movement, as seen from the top, as illustrated in Fig. 4b. In Fig. 4b this counter-clockwise rotation is illustrated by means of arrows FCC. Furthermore, the dispersers 14 and 18 have a different design compared to the dispersers 16 and 20, and provide the flue gas supplied thereto with a clockwise rotary movement, as seen from the top, as illustrated in Fig. 4b. In Fig. 4b this clockwise rotation is illustrated by means of arrows FC.

Each of the dispersers 14, 16, 18, 20 is located at substantially the same distance D from the periphery P of the spray dryer chamber 12. Looking at the disperser 16, the flow directing device, denoted 50 and 52 and illustrated in detail in Fig. 2, of that disperser 16 is operative for providing the portion of the flue gas passing through that specific disperser 16 with a rotary movement in a direction, i.e., counter-clockwise direction as seen from above, which is opposite to the direction of the rotary movement, i.e., clockwise direction as seen from above, of the respective portions of the flue gas dispersed by the two dispersers 14, 18 being located closest to that specific disperser 16, as seen along the periphery P of the spray dryer chamber 12. Similarly, the disperser 14, providing the portion of the flue gas supplied thereto with a clockwise rotary movement, as seen from above, has, as its closest "neighbours", two dispersers 16 and 20 that provide the flue gas with a counter-clockwise rotary movement. Hence, each of the dispersers 14, 16, 18, 20 has, as its closest "neighbours" two dispersers that provide the flue gas with the opposite direction of movement, compared to the rotary movement provided to the flue gas by that specific disperser.

As an example, at the point N1 where the dispersers 14 and 16 are located closest to each other, the flow fields from both dispersers 14, 16 will have the same direction. A similar flow behaviour will be present at the points N2, N3 and N4. Hence, for all four points N1, N2, N3, N4 where the flow fields of two adjacent dispersers 14, 16, 18, 20 may interact, the flow fields of those two dispersers will always have the same direction, contrary to the prior art design, illustrated in Fig. 3a and Fig. 3b.

The design illustrated in Fig. 4a and 4b appears to provide a situation where the number of collisions between liquid droplets originating from any two adjacent dispersers is much reduced. The result is a decrease in the formation of large droplets compared to that of the prior art illustrated in Fig. 3a and 3b. Furthermore, in the spray dryer absorber 8 illustrated in Fig. 4a and 4b the rotary movement of the flue gas caused by the dispersers 14, 16, 18, 20 appears to last for an extended period of time, resulting in improved contact between the absorption liquid droplets and the flue gas, such improved contact resulting in an improved removal of gaseous pollutants and a shorter drying time of the liquid droplets. The risk of formation of large aggregates on the wall of the spray dryer chamber 12 also appears to be reduced compared to the prior art design.

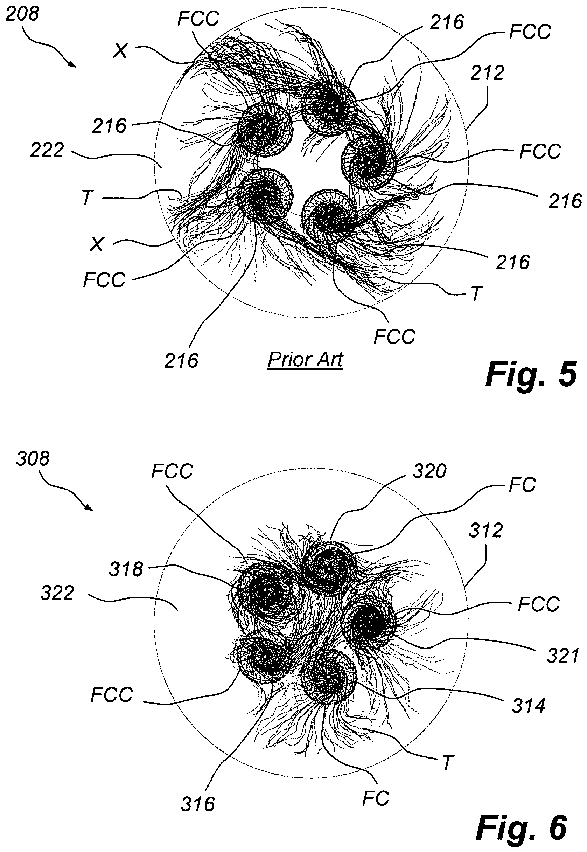

Fig. 5 illustrates a spray dryer absorber 208 in accordance with a further prior art design. This spray dryer absorber 208 has a spray dryer chamber 212 and a roof 222. At its roof 222, the spray dryer absorber 208 is provided with five dispersers 216. Each of those dispersers 216 will have a similar design as the disperser 16 described hereinbefore with reference to Fig. 2. The five dispersers 216 are arranged in accordance with similar principles as the three dispersers 116 of the spray dryer absorber 108. Hence, the flue gas supplied to each of the five dispersers 216 will be provided with a rotary movement in the counter-clockwise direction, indicated as FCC in Fig. 5, when viewed from the top of the spray dryer absorber 208. In Fig. 5 droplet trajectories T have been included, illustrated as lines starting from the respective dispersers 216. These trajectories T indicate the paths travelled by individual droplets of atomized liquid for one second after leaving the respective atomizer 24 of the respective disperser 216, described hereinbefore with reference to Fig. 2. The trajectories T are based on computational fluid dynamics calculations. The end of a trajectory indicates the position where almost all the liquid has dried out. It can be seen from Fig. 5 that the trajectories T hit the wall of the spray dryer chamber 212, in particular at the positions indicated by X. This indicates that droplets that are not dry hit the wall of the spray dryer chamber 212 in those positions, which may result in the formation of solid aggregates causing large problems of operating the spray dryer absorber 208.

Fig. 6 illustrates a spray dryer absorber 308 in accordance with a second embodiment of the present invention, as seen from the top thereof. As can be seen the spray dryer absorber 308 has a chamber 312 having a roof 322. The roof 322 is provided with five dispersers 314, 316, 318, 320, and 321, located at similar distances from the periphery of the chamber 312. As a consequence, and as can be seen from Fig. 6, the five dispersers 314, 316, 318, 320, and 321 are arranged in a ring. A first disperser 314, and a fourth disperser 320, as seen along the periphery of the chamber 312, are arranged to provide the flue gas supplied thereto with a clockwise direction of rotation, indicated by FC in Fig. 6. A second disperser 316, a third disperser 318, and a fifth disperser 321, are arranged to provide the flue gas supplied thereto with a counter-clockwise direction of rotation, indicated by FCC in Fig. 6. Hence, the dispersers 316, 318, and 321 are designed in a similar manner as the disperser 16 illustrated in detail in Fig. 2, while the dispersers 314 and 320 have guide vanes having the opposite setting, to provide the flue gas with the opposite direction of rotation, similar as the disperser 14 described with reference to Fig. 1.

Hence, with the design of Fig. 6 maximum two consecutive dispersers, namely the dispersers 316 and 318, as seen along the periphery of the spray dryer chamber 312, provides the flue gas supplied thereto with a rotary movement in the same direction, FCC.

In Fig. 6 trajectories T indicate the calculated paths of the liquid droplets for one second after leaving the respective atomizer 24 of the respective disperser 314, 316, 318, 320, and 321. As can be seen from Fig. 6, no trajectory hits the wall of the spray dryer chamber 312. Hence, with this arrangement, there will be much less problems with aggregates being formed on the wall, compared to the prior art embodiment of Fig. 5.

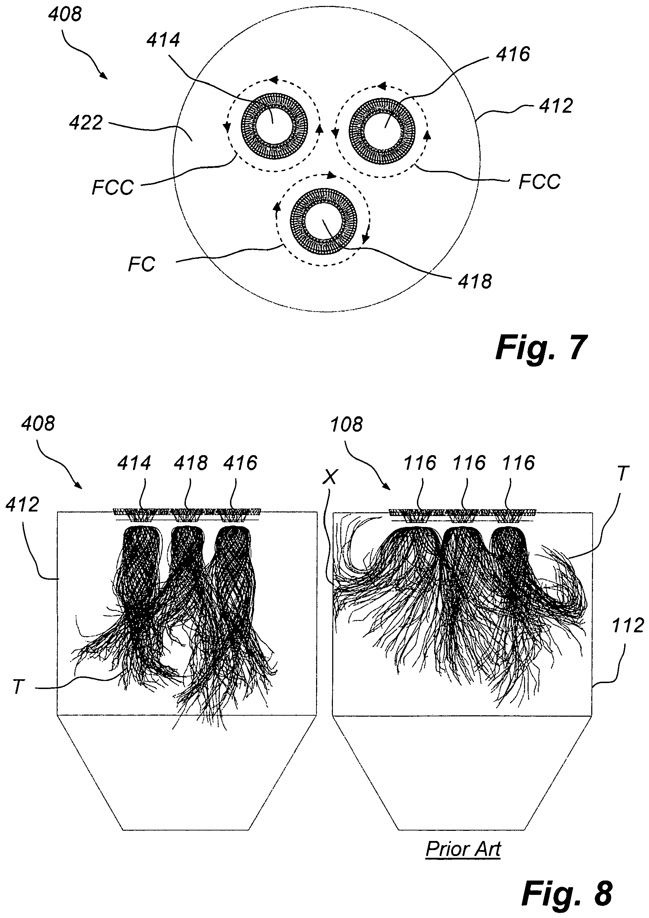

Fig. 7 illustrates a spray dryer absorber 408 in accordance with a third embodiment of the present invention as seen from the top thereof. As can be seen the spray dryer absorber 408 has a chamber 412 having a roof 422. The roof 422 is provided with three dispersers 414, 416, and 418. As can be seen from Fig. 7 the three dispersers 414, 416, and 418 are arranged in a similar manner as the three dispersers 116 of the prior art spray dryer absorber 108 illustrated hereinbefore with reference to Fig. 3a and Fig. 3b. However, returning to Fig. 7, a first disperser 414, and a second disperser 416, are arranged to provide the flue gas supplied thereto with a counter-clockwise direction of rotation, indicated by FCC in Fig. 7. A third disperser 418 is arranged to provide the flue gas supplied thereto with a clockwise direction of rotation, indicated by FC in Fig. 7. Hence, the dispersers 414, and 416, are designed in a similar manner as the disperser 16 illustrated in detail in Fig. 2, while the disperser 418 has guide vanes having the opposite setting, to provide the flue gas with the opposite direction of rotation, similar as the disperser 14 described with reference to Fig. 1.

Fig. 8 illustrates the performance of the spray dryer absorber 408 described with reference to Fig. 7 in comparison with the performance of the prior art spray dryer absorber 108 illustrated with reference to Figs 3a and 3b. Trajectories T indicate the calculated paths travelled by individual droplets of atomized liquid during one second after leaving the respective atomizer 24 of the respective disperser 414, 416, 418, and 116, respectively, of the spray dryer absorbers 408 and 108, the spray dryer absorbers 408 and 108 being illustrated in a side view in Fig. 8. As can be seen from a reference to Fig. 8, the trajectories T of the spray dryer absorber 408 are all rather focused to the centre of the spray dryer chamber 412. Hence, the problems of liquid droplets hitting the wall and forming aggregates are very limited in the spray dryer absorber 408. On the other hand, the trajectories T generated in the prior art spray dryer absorber 108 are much more irregular, and a substantial portion of the droplets hit the walls of the spray dryer chamber 112, for example at the position X, where generation of solid aggregates is likely to occur. Hence, the spray dryer absorber 408 can be expected to generate a much more stable operation, with less operating problems, than the prior art spray dryer absorber 108.

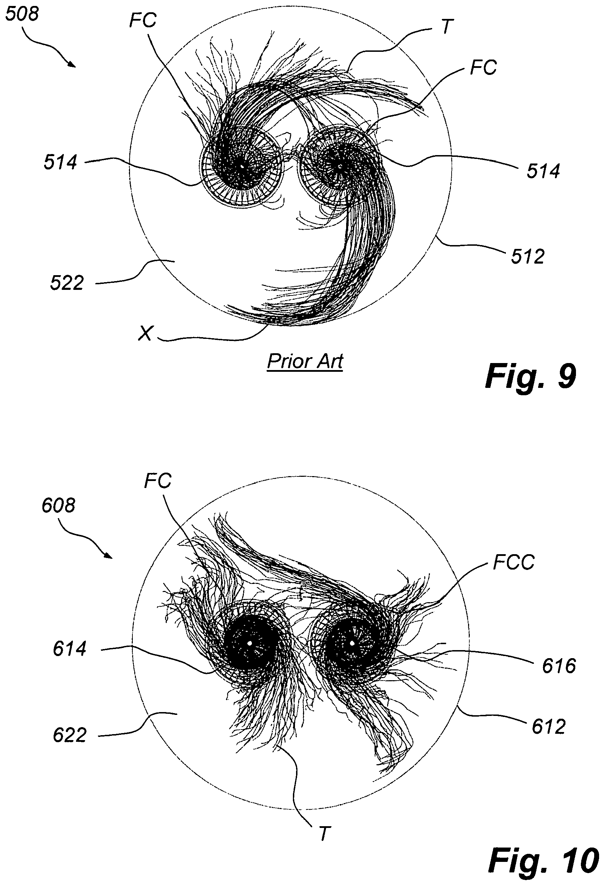

Fig. 9 illustrates a spray dryer absorber 508 in accordance with a still further prior art design. This spray dryer absorber 508 has a spray dryer chamber 512 and a roof 522. At its roof 522, the spray dryer absorber 508 is provided with two dispersers 514. Each of those dispersers 514 will have a similar design as the disperser 14 described hereinbefore with reference to Fig. 1, hence a similar design as the disperser 16 illustrated in Fig. 2, but with the guide vanes having the opposite setting. The two dispersers 514 are arranged symmetrically around the centre of the roof 522, and hence at similar distances from the periphery of the spray dryer chamber 512. The flue gas supplied to each of the two dispersers 514 will be provided with a rotary movement in the clockwise direction, indicated as FC in Fig. 9, when viewed from the top of the spray dryer absorber 508. Trajectories T indicate the paths travelled by individual droplets of atomized liquid for one second after leaving the respective atomizer of the respective disperser 514, after which one second almost all of the liquid has been dried by the flue gas. The trajectories T are based on computational fluid dynamics calculations. It can be seen from Fig. 9 that the trajectories T hit the wall of the spray dryer chamber 512, in particular at the position indicated by X. This may result in the formation of aggregates causing large problems of operating the spray dryer absorber 508.

Fig. 10 illustrates a spray dryer absorber 608 in accordance with a fourth embodiment of the present invention, as seen from the top thereof. As can be seen the spray dryer absorber 608 has a chamber 612 having a roof 622. The roof 622 is provided with two dispersers 614, and 616. As can be seen from Fig. 10 the two dispersers 614, 616 are arranged symmetrically around the centre of the roof 622, and at the same distance from the periphery of the wall of the chamber 612. A first disperser 614 is arranged to provide the flue gas supplied thereto with a clockwise direction of rotation, indicated by FC in Fig. 10. A second disperser 616 is arranged to provide the flue gas supplied thereto with a counter-clockwise direction of rotation, indicated by FCC in Fig. 10. Hence, the disperser 616 is designed in a similar manner as the disperser 16 illustrated in detail in Fig. 2, while the disperser 614 has guide vanes having the opposite setting, to provide the flue gas with the opposite direction of rotation, similar as the disperser 14 described with reference to Fig. 1.

Trajectories T indicate the calculated paths of the liquid droplets for one second after leaving the respective atomizer 24 of the respective disperser 614 and 616, after which one second almost all of the liquid has been dried by the flue gas. As can be seen from Fig. 10, no trajectory hits the wall of the spray dryer chamber 612. Hence, with this arrangement, there will be much less problems with aggregates being formed on the wall, compared to the prior art embodiment of Fig. 9.

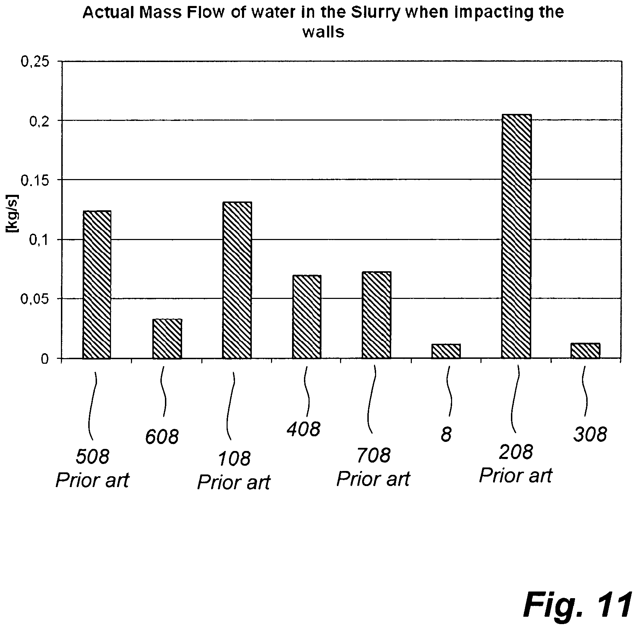

Fig. 11 is a bar diagram illustrating the amount of atomized liquid, water, hitting the wall of the spray dryer chamber in the various embodiments. Hence, for each embodiment, the bar indicates the amount of water, in kg/s, of the atomized liquid hitting the wall of the spray dryer chamber, as calculated by means of computational fluid dynamics calculations. The lower the amount of water hitting the wall, the lower the risk of aggregates forming on the wall.

From Fig. 11 it can be seen that the prior art spray dryer absorber 508, having two dispersers 514 as illustrated in Fig. 9, generates a flow of about 0,125 kg/s of water impacting the walls of the spray dryer chamber 512, while the spray dryer absorber 608 having two dispersers 614, 616 as illustrated in Fig. 10, generates a flow of only about 0,035 kg/s of water impacting the walls of the spray dryer chamber 612, being only 28% of the amount of the prior art spray dryer 508.

Furthermore, the prior art spray dryer absorber 108, having three dispersers 116 as illustrated in Fig. 3b, generates a flow of about 0,130 kg/s of water impacting the walls of the spray dryer chamber 112, while the spray dryer absorber 408 having three dispersers 414, 416, 418 as illustrated in Fig. 7, generates a flow of only about 0,07 kg/s of water impacting the walls of the spray dryer chamber 412, being only 54% of the amount of the prior art spray dryer 108.

Furthermore, calculations were also made for a prior art spray dryer absorber 708 having four dispersers. The prior art spray dryer absorber 708 is not illustrated in detail, but had a similar design as the spray dryer absorber 8 illustrated with reference to Fig. 4b, except for the fact that all four dispersers of the prior art spray dryer absorber 708 provided the flue gas supplied thereto with a counter-current direction of rotation. The prior art spray dryer absorber 708 having four counter-current directing dispersers generates a flow of about 0,08 kg/s of water impacting the walls of the spray dryer chamber, while the spray dryer absorber 8 having four dispersers 14, 16, 18, 20 as illustrated in Fig. 4b, generates a flow of only about 0,015 kg/s of water impacting the walls of the spray dryer chamber 12, being only 19% of the amount of the prior art spray dryer 708.

Finally, the prior art spray dryer absorber 208, having five dispersers 216 as illustrated in Fig. 5, generates a flow of about 0,205 kg/s of water impacting the walls of the spray dryer chamber 212, while the spray dryer absorber 308 having five dispersers 314, 316, 318, 320 and 321 as illustrated in Fig. 6, generates a flow of only about 0,015 kg/s of water impacting the walls of the spray dryer chamber 412, being only 7 % of the amount of the prior art spray dryer 208.

Hence, for each specific number of dispersers of a spray dryer absorber, it is surprisingly much better to arrange those dispersers in accordance with the principles of the present invention compared to arranging them according to the prior art, as regards the risk of aggregates forming on the walls of the spray dryer chamber.

It will be appreciated that numerous modifications of the embodiments described above are possible within the scope of the appended claims.

Above it has been described that a spray dryer absorber 8, 308, 408, 608 may be provided with 2, 3, 4 or 5 dispersers. It will be appreciated that the same effect could be achieved with other numbers of dispersers, being two or more, located at the same distance D from the periphery P of the spray dryer chamber 12. Typically, a spray dryer absorber designed in accordance with the present invention would be provided with 2 to 9 dispersers located at substantially the same distance D from the periphery P of the spray dryer chamber.

Above it has been described that in a spray dryer absorber having at least three dispersers, it is preferable that maximum two consecutive dispersers of those at least three dispersers are operative for providing the flue gas supplied thereto with a rotary movement in the same direction. Hence, in a spray dryer absorber having five dispersers and being designed in accordance with a further embodiment of the present invention it would be possible, as an example, to have four of these dispersers providing the gas with a counter-clockwise rotation, FCC, and just one disperser providing the gas with a clockwise rotation, FC, or, as a further example, to have three consecutive dispersers providing the gas with a counter-clockwise rotation, FCC, and two consecutive dispersers providing the gas with a clockwise rotation, FC. However, those alternative embodiments are generally less preferred than what is illustrated in Fig. 6, where maximum two consecutive dispersers, i.e., the dispersers 316 and 318, provide the flue gas supplied thereto with a rotary movement in the same direction, FCC.

To summarize, a spray dryer absorber is operative for removing gaseous pollutants from a hot process gas and comprises at least two dispersers. Each such disperser is operative for dispersing a portion of the hot process gas around a respective atomizer, and for providing the respective portion of the hot process gas with a rotary movement around the atomizer. At least one specific disperser is operative for providing the hot process gas passing through that specific disperser with a rotary movement in a direction, which is opposite to the direction of the rotary movement of the respective portion of the hot process gas dispersed by at least one other disperser being located closest to that specific disperser.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A spray dryer absorber (8; 308; 408; 608) which is operative for removing gaseous pollutants from a hot process gas and comprises a spray dryer chamber (12; 312; 412; 612) and at least two dispersers (14, 16; 314, 316; 416, 418; 614, 616) mounted at a roof (22; 322; 422; 622) of the spray dryer chamber, each such disperser being operative for dispersing a portion of the hot process gas around a respective atomizer (24) which is operative for atomizing an absorption liquid, said at least two dispersers (14, 16; 314, 316; 416, 418; 614, 616) being located at substantially the same distance (D) from the periphery (P) of the spray dryer chamber (12; 312; 412; 612),
**characterised in**
each disperser being provided with a flow directing device (50, 52), which is operative for providing the respective portion of the hot process gas with a rotary movement around the atomizer (24), as seen from the top of the spray dryer chamber (12; 312; 412; 612),
the flow directing device of at least one specific disperser (14; 314; 418; 614) of said at least two dispersers being operative for providing said portion of the hot process gas passing through that specific disperser (14; 314; 418; 614) with a rotary movement in a direction (FC), which is opposite to the direction (FCC) of the rotary movement of the respective portion of the hot process gas dispersed by at least one other disperser (16; 316; 416; 616) being located closest to said at least one specific disperser (14; 314; 418; 614), as seen along the periphery (P) of the spray dryer chamber (12; 312; 412; 612).

2. A spray dryer absorber according to claim 1, the spray dryer absorber (8; 308; 408) comprising at least three dispersers (14, 16, 18, 20; 314, 316, 318, 320, 321; 414, 416, 418), maximum two consecutive dispersers (316, 318; 414, 416) of said at least three dispersers, as seen along the periphery of the spray dryer chamber (312; 412), being operative for providing the process gas supplied thereto with a rotary movement in the same direction (FCC).

3. A spray dryer absorber according to any one of claims 1-2, wherein the spray dryer chamber (12; 312; 412; 612) is circular as seen from above.

4. A spray dryer absorber according to any one of the preceding claims, wherein the total number of dispersers is 2 to 9.

5. A method of removing gaseous pollutants from a hot process gas by means of a spray dryer absorber (8; 308; 408; 608) comprising a spray dryer chamber (12; 312; 412; 612) and at least two dispersers (14, 16; 314, 316; 416, 418; 614, 616) mounted at a roof (22; 322; 422; 622) of the spray dryer chamber, each such disperser being operative for dispersing a portion of the hot process gas around a respective atomizer (24) which is operative for atomizing an absorption liquid, each disperser being provided with a flow directing device (50, 52), which is operative for providing the respective portion of the hot process gas with a rotary movement around the atomizer (24), as seen from the top of the spray dryer chamber (12; 312; 412; 612), the method comprising causing the respective portion of the hot process gas passing through at least one specific disperser (14; 314; 418; 614) of said at least two dispersers to obtain a rotary movement in a direction (FC), which is opposite to the direction (FCC) of the rotary movement of the respective portion of the hot process gas dispersed by at least one other disperser (16; 316; 416; 616) being located closest to said at least one specific disperser (14; 314; 418; 614), as seen along the periphery (P) of the spray dryer chamber (12; 312; 412; 612).

6. A method according to claim 5, the spray dryer absorber (8; 308; 408) comprising at least three dispersers (14, 16, 18, 20; 314, 316, 318, 320, 321; 414, 416, 418), maximum two consecutive dispersers (316, 318; 414, 416) of said at least three dispersers, as seen along the periphery of the spray dryer chamber (312; 412), providing the process gas supplied thereto with a rotary movement in the same direction (FCC).

## Patentansprüche

1. Sprühtrocknungsabsorber (8; 308; 408; 608), der zur Entfernung von gasförmigen Verunreinigungen aus einem heißen Prozessgas wirksam ist und eine Sprühtrocknungskammer (12; 312; 412; 612) und wenigstens zwei Dispergiervorrichtungen (14, 16; 314, 316; 416, 418; 614, 616) umfasst, die an einem Dach (22; 322; 422; 622) der Sprühtrocknungskammer angebracht sind, wobei jede dieser Dispergiervorrichtungen zur Abgabe eines Teils des heißen Prozessgases um einen jeweiligen Zerstäuber (24) wirksam ist, der zur Zerstäubung einer Absorptionsflüssigkeit wirksam ist, wobei die wenigstens zwei Dispergiervorrichtungen (14, 16; 314, 316; 416, 418; 614, 616) im Wesentlichen im selben Abstand (D) vom Umfang (P) der Sprühtrocknungskammer (12; 312; 412; 612) angeordnet sind,
**dadurch gekennzeichnet, dass**
jede Dispergiervorrichtung mit einer Strömungslenkungsvorrichtung (50, 52) ausgestattet ist, die zur Bereitstellung des jeweiligen Teils des heißen Prozessgases mit einer Drehbewegung um den Zerstäuber (24), gesehen von der Oberseite der Sprühtrocknungskammer (12; 312; 412; 612), wirksam ist,
die Strömungslenkungsvorrichtung zumindest einer bestimmten Dispergiervorrichtung (14; 314; 418; 614) der wenigstens zwei Dispergiervorrichtungen zur Bereitstellung des Teils des heißen Prozessgases wirksam ist, das durch die bestimmte Dispergiervorrichtung (14; 314; 418; 614) strömt, mit einer Drehbewegung in eine Richtung (FC), die der Richtung (FCC) der Drehbewegung des jeweiligen Teils des heißen Prozessgases, der von wenigstens einer anderen, der wenigstens einen bestimmten Dispergiervorrichtung (14; 314; 418; 614) am nächsten liegenden Dispergiervorrichtung (16; 316; 416; 616), gesehen entlang des Umfangs (P) der Sprühtrocknungskammer (12; 312; 412; 612), dispergiert wird, entgegengesetzt ist.

2. Sprühtrocknungsabsorber nach Anspruch 1, wobei der Sprühtrocknungsabsorber (8; 308; 408) wenigstens drei Dispergiervorrichtungen (14, 16, 18, 20; 314, 316, 318, 320, 321; 414, 416, 418) umfasst, wobei maximal zwei aufeinander folgende Dispergiervorrichtungen (316, 318; 414, 416) der wenigstens drei Dispergiervorrichtungen, gesehen entlang des Umfangs der Sprühtrocknungskammer (312; 412), zur Bereitstellung des dieser zugeführten Prozessgases mit einer Drehbewegung in dieselbe Richtung (FCC) wirksam sind.

3. Sprühtrocknungsabsorber nach einem der Ansprüche 1-2, wobei die Sprühtrocknungskammer (12; 312; 412; 612) von oben gesehen kreisförmig ist.

4. Sprühtrocknungsabsorber nach einem der vorhergehenden Ansprüche, wobei die Gesamtzahl der Dispergiervorrichtungen 2 bis 9 beträgt.

5. Verfahren zur Entfernung von gasförmigen Verunreinigungen aus einem heißen Prozessgas mittels eines Sprühtrocknungsabsorbers (8; 308; 408; 608), der eine Sprühtrocknungskammer (12; 312; 412; 612) und wenigstens zwei Dispergiervorrichtungen (14, 16; 314, 316; 416, 418; 614, 616) umfasst, die an einem Dach (22; 322; 422; 622) der Sprühtrocknungskammer angebracht sind, wobei jede dieser Dispergiervorrichtungen zur Abgabe eines Teils des heißen Prozessgases um einen jeweiligen Zerstäuber (24) wirksam ist, der zur Zerstäubung einer Absorptionsflüssigkeit wirksam ist, wobei jede Dispergiervorrichtung mit einer Strömungslenkungsvorrichtung (50, 52) ausgestattet ist, die zur Bereitstellung des jeweiligen Teils des heißen Prozessgases mit einer Drehbewegung um den Zerstäuber (24), gesehen von der Oberseite der Sprühtrocknungskammer (12; 312; 412; 612), wirksam ist, wobei das Verfahren umfasst, dass veranlasst wird, dass der jeweilige Teil des heißen Prozessgases durch wenigstens eine bestimmte Dispergiervorrichtung (14; 314; 418; 614) der wenigstens zwei Dispergiervorrichtungen fließt, um eine Drehbewegung in einer Richtung (FC) zu erhalten, die der Richtung (FCC) der Drehbewegung des jeweiligen Teils des heißen Prozessgases, der von wenigstens einer anderen, der wenigstens einen bestimmten Dispergiervorrichtung (14; 314; 418; 614) am nächsten liegenden Dispergiervorrichtung (16; 316; 416; 616), gesehen entlang des Umfangs (P) der Sprühtrocknungskammer (12; 312; 412; 612), dispergiert wird, entgegengesetzt ist.

6. Verfahren nach Anspruch 5, wobei der Sprühtrocknungsabsorber (8; 308; 408) wenigstens drei Dispergiervorrichtungen (14, 16, 18, 20; 314, 316, 318, 320, 321; 414, 416, 418) umfasst, wobei maximal zwei aufeinander folgende Dispergiervorrichtungen (316, 318; 414, 416) der wenigstens drei Dispergiervorrichtungen, gesehen entlang des Umfangs der Sprühtrocknungskammer (312; 412), das dieser zugeführte Prozessgas mit einer Drehbewegung in dieselbe Richtung (FCC) bereitstellen.

## Revendications

1. Absorbeur-sécheur à pulvérisation (8 ; 308 ; 408 ; 608) qui peut agir pour éliminer des polluants gazeux à partir d'un gaz de procédé chaud et comprend une chambre de séchage par pulvérisation (12 ; 312 ; 412 ; 612) et au moins deux disperseurs (14, 16 ; 314, 316 ; 416, 418 ; 614, 616) installés au niveau d'une partie supérieure (22 ; 322 ; 422 ; 622) de la chambre de séchage par pulvérisation, chacun desdits disperseurs pouvant agir pour disperser une partie du gaz de procédé chaud autour d'un atomiseur (24) respectif qui peut agir pour atomiser un liquide d'absorption, lesdits au moins deux disperseurs (14, 16 ; 314, 316 ; 416, 418 ; 614, 616) étant situés essentiellement à la même distance (D) de la périphérie (P) de la chambre de séchage par pulvérisation (12 ; 312 ; 412 ; 612),
**caractérisé en ce que**
chaque disperseur est pourvu d'un dispositif d'orientation d'écoulement (50, 52), qui peut agir pour imprimer à la partie respective du gaz de procédé chaud un mouvement de rotation autour de l'atomiseur (24), lorsque l'on observe depuis le dessus de la chambre de séchage par pulvérisation (12 ; 312 ; 412 ; 612),
le dispositif d'orientation d'écoulement d'au moins un disperseur spécifique (14 ; 314 ; 418 ; 614) parmi lesdits au moins deux disperseurs pouvant agir pour imprimer à ladite partie du gaz de procédé chaud passant à travers ce disperseur spécifique (14 ; 314 ; 418 ; 614) un mouvement de rotation dans une direction (FC), qui est opposée à la direction (FCC) du mouvement de rotation de la partie respective du gaz de procédé chaud dispersé par au moins un autre disperseur (16 ; 316 ; 416 ; 616) situé le plus près dudit ou desdits disperseurs spécifiques (14 ; 314 ; 418 ; 614), lorsque l'on observe le long de la périphérie (P) de la chambre de séchage par pulvérisation (12 ; 312 ; 412 ; 612).

2. Absorbeur-sécheur à pulvérisation selon la revendication 1, l'absorbeur-sécheur à pulvérisation (8 ; 308 ; 408) comprenant au moins trois disperseurs (14, 16, 18, 20 ; 314, 316, 318, 320, 321 ; 414, 416, 418), au plus deux disperseurs consécutifs (316, 318 ; 414, 416) parmi lesdits au moins trois disperseurs, lorsque l'on observe le long de la périphérie de la chambre de séchage par pulvérisation (312 ; 412), pouvant agir pour imprimer au gaz de procédé qu'ils reçoivent un mouvement de rotation dans la même direction (FCC).

3. Absorbeur-sécheur à pulvérisation selon l'une quelconque des revendications 1 et 2, dans lequel la chambre de séchage par pulvérisation (12 ; 312 ; 412 ; 612) est circulaire lorsque l'on observe depuis le dessus.

4. Absorbeur-sécheur à pulvérisation selon l'une quelconque des revendications précédentes, dans lequel le nombre total de disperseurs est de 2 à 9.

5. Procédé pour éliminer des polluants gazeux à partir d'un gaz de procédé chaud au moyen d'un absorbeur-sécheur à pulvérisation (8 ; 308 ; 408 ; 608) comprenant une chambre de séchage par pulvérisation (12 ; 312 ; 412 ; 612) et au moins deux disperseurs (14, 16 ; 314, 316 ; 416, 418 ; 614, 616) installés au niveau d'une partie supérieure (22 ; 322 ; 422 ; 622) de la chambre de séchage par pulvérisation, chacun desdits disperseurs pouvant agir pour disperser une partie du gaz de procédé chaud autour d'un atomiseur (24) respectif qui peut agir pour atomiser un liquide d'absorption, chaque disperseur étant pourvu d'un dispositif d'orientation d'écoulement (50, 52), qui peut agir pour imprimer à la partie respective du gaz de procédé chaud un mouvement de rotation autour de l'atomiseur (24), lorsque l'on observe depuis le dessus de la chambre de séchage par pulvérisation (12 ; 312 ; 412 ; 612),
le procédé comprenant le fait de faire en sorte que la partie respective du gaz de procédé chaud passant à travers au moins un disperseur spécifique (14 ; 314 ; 418 ; 614) parmi les au moins deux disperseurs acquière un mouvement de rotation dans une direction (FC), qui est opposée à la direction (FCC) du mouvement de rotation de la partie respective du gaz de procédé chaud dispersé par au moins un autre disperseur (16 ; 316 ; 416 ; 616) situé le plus près dudit ou desdits disperseurs spécifiques (14 ; 314 ; 418 ; 614), lorsque l'on observe le long de la périphérie (P) de la chambre de séchage par pulvérisation (12 ; 312 ; 412 ; 612).

6. Procédé selon la revendication 5, l'absorbeur-sécheur à pulvérisation (8 ; 308 ; 408) comprenant au moins trois disperseurs (14, 16, 18, 20 ; 314, 316, 318, 320, 321 ; 414, 416, 418), au plus deux disperseurs consécutifs (316, 318 ; 414, 416) parmi lesdits au moins trois disperseurs, lorsque l'on observe le long de la périphérie de la chambre de séchage par pulvérisation (312 ; 412), imprimant au gaz de procédé qu'ils reçoivent un mouvement de rotation dans la même direction (FCC).
